Europäisches Patentamt

European Patent Office

Office européen des brevets

(19)

(11) EP 1 596 382 A1

(12) **EUROPEAN PATENT APPLICATION**
published in accordance with Art. 158(3) EPC

(43) Date of publication:
16.11.2005 Bulletin 2005/46

(51) Int Cl.⁷: **G11B 7/135**

(21) Application number: 04706857.2

(86) International application number:
**PCT/JP2004/000949**

(22) Date of filing: 30.01.2004

(87) International publication number:
**WO 2004/068482 (12.08.2004 Gazette 2004/33)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **30.01.2003 JP 2003021981**

(71) Applicant: **SONY CORPORATION
Tokyo 141-0001 (JP)**

(72) Inventors:
• **WATANABE, Tetsu c/o SONY CORPORATION
Tokyo (JP)**
• **KANAZAWA, Takakiyo
c/o SONY CORPORATION
Tokyo (JP)**
• **AOKI, Sunao c/o SONY CORPORATION
Tokyo (JP)**
• **YAMADA, Masahiro c/o SONY CORPORATION
Tokyo (JP)**

(74) Representative: **Thévenet, Jean-Bruno et al
Cabinet Beau de Loménie
158, rue de l'Université
75340 Paris Cédex 07 (FR)**

(54) **FLOAT TYPE SLIDER, OPTICAL HEAD DEVICE, AND INFORMATION PROCESSING DEVICE**

(57)     The influence of dust is reduced to prevent degradation of the recording and reproduction performances of an optical head apparatus and an information processing apparatus which use a flying slider. The optical head apparatus includes a slider (28) for being flown by an air flow produced by rotation of a disk-type recording medium. Parallel rail elements (28A, 28B) are formed along the direction of the air flow on an opposing face of the slider to the disk-type recording medium. Another rail element (29) is formed in the middle between the two rail elements, and beam light condensed by an objective lens passes through the rail element (29) formed from a transparent material. Even if a foreign particle flows into a gap between the slider and the disk-type recording medium, the optical influence of the foreign particle is less likely to be exerted.

F I G. 6

EP 1 596 382 A1

# Description

## Technical Field

This invention relates to a technique for a countermeasure against dust for reducing, in a slider which is flown by an air flow produced by rotation of a disk-type recording medium and an optical head apparatus and an information processing apparatus which include the slider, the influence of foreign particles or the like flowing into a space between the slider and the disk-type recording medium to prevent appearance of an error.

## Background Art

As a drive apparatus which uses an optical recording medium such as an optical disk or a magneto-optical disk, a drive apparatus is known which includes an optical head of a so-called flying head structure which uses a slider (flying slider) that is flown by an air flow produced by rotation of the disk-type recording medium (refer to, for example, Patent Document 1 and Patent Document 2).

Bottom face shapes (shape as viewed from the recording medium side) of sliders can be classified into two types including a negative pressure type and a positive pressure type.

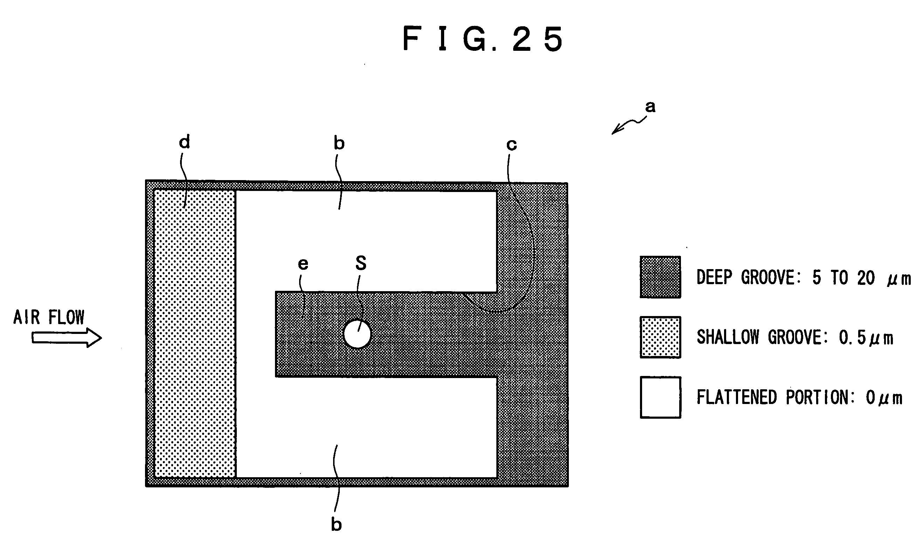

A negative pressure type slider a shown in FIG. 25 has a configuration that it has, for example, a channel-shaped rail element b formed on the bottom face thereof and further has a deep groove c formed on the bottom face thereof and having a depth of approximately several μm to several tens μm. Further, a shallow groove d having a depth equal to or less than 1 μm is formed at a portion of the rail element b on the air inflow side (upstream side). Reference character "S" indicated by a mark o in the deep groove c indicates a passage (position) of a beam condensed by an objective lens not shown, and when a disk-type recording medium rotates, negative pressure is generated at a location (e portion) displaced a little on the upstream side from the place "S" (there is the possibility that foreign particles may be accumulated at the location).

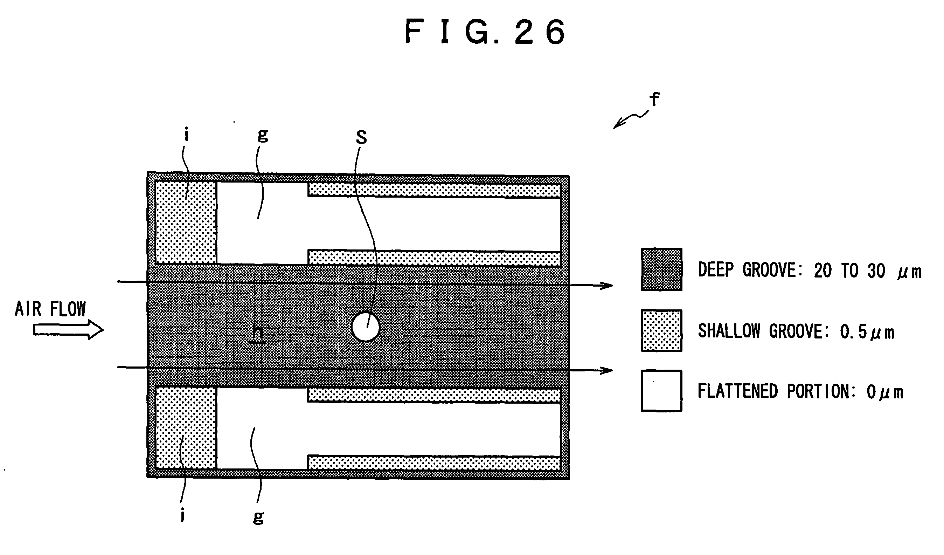

On the other hand, a positive pressure type slider f shown in FIG. 26 has a configuration that two parallel rail elements g are formed and a deep groove h is formed between the rail elements g. A shallow groove i is formed at a portion of each of the rail elements g on the air inflow side (upstream side). It is to be noted that reference character "S" indicated by a mark o substantially in the middle of the deep groove h indicates a passage (position) of a beam condensed by an objective lens not shown, and each arrow mark indicated in the deep groove h represents a flow of air.

Patent Document 1: Japanese Patent Laid-Open No. 2001-184704 (paragraph numbers 0045, 0046, FIG. 3)

Patent Document 2: Japanese Patent Laid-Open No. 2002-251770 (paragraph numbers 0017 to 0019, FIG. 1)

However, the conventional slider configurations have a problem that they have no sufficient countermeasure against the influence of dust.

For example, if the distribution (Mass Flow) of air flows or the air pressure distribution on the bottom face configurations of the sliders shown in FIGS. 25 and 26 are examined from simulation results or the like, then it is found out that the possibility that foreign particles or the like may flow into the deep groove portion is high.

As regards an actual foreign particle distribution in the general environment, it is known from a result of measurement conducted with the shutter of a disk cartridge left open that the smaller the particle size, the greater the amount of foreign particles and some existing foreign particle has a particle size of up to 100 μm.

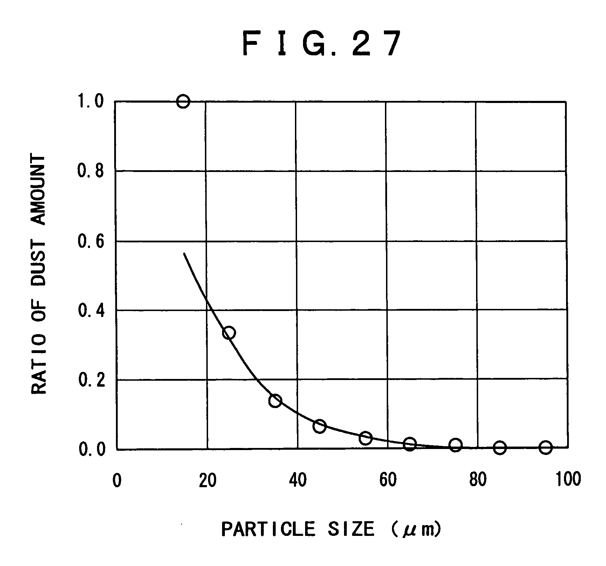

FIG. 27 is a graph wherein the axis of abscissa is the particle size of dust (unit: μm) and the axis of ordinate is the ratio (statistics) at which the amount of dust of a certain particle size occupies in the total dust amount, and illustrates a relationship between them. The count value of the ratio indicated by the axis of ordinate decreases substantially in proportion to the first to second power of the dust particle size. For example, where the particle size is 10 to 20 μm, the count value is approximately 1,000 to 1,500 per unit area, but where the particle size is 20 to 30 μm, the count value is approximately 200 to 500 per unit area.

The inflow of a foreign particle into the deep groove portion formed on a slider makes a cause of a defect, and as the error occurrence rate becomes high, this makes a factor of causing degradation of the recording and reproduction performances.

Therefore, it is a subject of the present invention to reduce the influence of foreign particles to prevent degradation of the recording and reproduction performances by structural improvement of a flying slider used in an optical reading method of information.

## Disclosure of Invention

According to the present invention, in order to solve the subject described above, a flying slider which is flown by an air flow produced by rotation of a disk-type recording medium has the following features.

- A pair of rail elements are formed in parallel to each other along the direction of the air flow on a face of the flying slider which opposes to the disk-type recording medium.
- A middle rail element or protrusion extending in the direction of the air flow in the middle in a widthwise direction of the two rail elements perpendicular to the direction of the air flow and formed with a width smaller than that of the two rail elements, and the middle rail element or protrusion passes the beam light therethrough.

Consequently, according to the present invention, since the beam light passes through the middle rail element or protrusion formed between the parallel rail elements paired with each other, even if dust flows into a gap between the slider and the disk-type recording medium together with the air flow, the optical influence of the dust on the passage of the beam can be eliminated.

Brief Description of Drawings

FIG. 1 is a schematic view showing an example of a basic configuration of an information processing apparatus according to the present invention:

FIG. 2 is a schematic view showing an example of a configuration of an optical head apparatus according to the present invention;

FIG. 3 is a schematic view showing an example of a configuration of a magneto-optical head apparatus according to the present invention;

FIGS. 4A and 4B are for illustrating an influence of a foreign particle entering a gap between a slider and a disk together with FIG. 5, and the figures are schematic views of an air inlet port and the foreign particle size and beam area;

FIG. 5 is a graph illustrating relationships between the foreign particle size and occurrence of errors in different cover coat layer thicknesses;

FIG. 6 is a bottom plan view of an example of a shape of a slider;

FIG. 7 is a graph illustrating relationships between the position in a radial direction of a disk and the flying height at different positions of the slider in a rolling direction;

FIG. 8 is a bottom plan view showing an example of a shape of a slider which has three rail elements;

FIG. 9 is a perspective view showing an example of the slider which has three rail elements;

FIG. 10 is a perspective view showing another example of the slider which has three rail elements;

FIG. 11 is a bottom plan view showing another example of the shape of the slider;

FIG. 12 is a bottom plan view of a slider showing an example wherein a protrusion is formed between two flying rail elements;

FIG. 13 shows an example of a configuration wherein the height of a middle rail element or protrusion is set lower than the height of flying rail elements to provide an offset together with FIG. 14, and this figure is a front elevational view schematically showing a slider as viewed in an air inflow direction;

FIG. 14 is a side elevational view schematically showing the slider as viewed in a rolling direction;

FIG. 15 is a bottom plan view showing another example of the slider wherein a protrusion is formed between two flying rail elements;

FIG. 16 shows an example of a configuration of a slider wherein a cylindrical protrusion is formed between flying rail elements together with FIG. 17, and this figure is a bottom plan view of a slider of a configuration wherein a protrusion is formed in the middle between two rail elements;

FIG. 17 is a bottom plan view of the slider showing a configuration wherein a concave face is formed on a flying rail element;

FIG. 18 is a side elevational view conceptively illustrating a manner wherein a lens keeps a posture parallel to a disk face when a slider is in a flying state;

FIGS. 19A and 19B are views showing an example wherein a DLC protective layer is formed on the bottom face of a slider;

FIG. 20 is a graph illustrating an influence of a protective layer on the transmission factor where the protective layer is formed on the bottom face of a slider;

FIG. 21 is a schematic view showing an example wherein a lubricating material is applied directly to the bottom face of a slider;

FIG. 22 is a schematic view showing an example wherein a lubricating material is applied after a DLC or deposit film is formed on the bottom face of a slider;

FIG. 23 is a schematic view showing an example wherein a bottom face portion of a slider is formed from a deposit film and a lubricating material is applied to the bottom face portion;

FIG. 24 is a schematic view showing an example wherein a bottom face portion of a slider is formed from a substrate and a lubricating material is applied to the bottom face portion;

FIG. 25 is a view showing a shape of the bottom face of a conventional slider together with FIG. 26, and this figure is a view showing an example of a negative pressure type slider;

FIG. 26 is a view showing an example of a positive pressure type slider; and

FIG. 27 is a graph illustrating an example of a distribution of foreign particles.

Best Mode for Carrying out the Invention

The present invention relates to a flying slider and an optical head apparatus and an information processing apparatus which use the flying slider. The invention can be applied to an optical disk drive apparatus (for example, an optical hard disk drive, an optical flexible disk drive or the like), for example, for an optical disk, a magneto-optical disk or the like. It is to be noted that, in applications to the information processing apparatus, the information processing apparatus may have any form from among an apparatus for reproduction only, a recording and reproduction apparatus and an apparatus for recording only because it does not matter whether it should reproduce or record information on or from a disk-type recording medium.

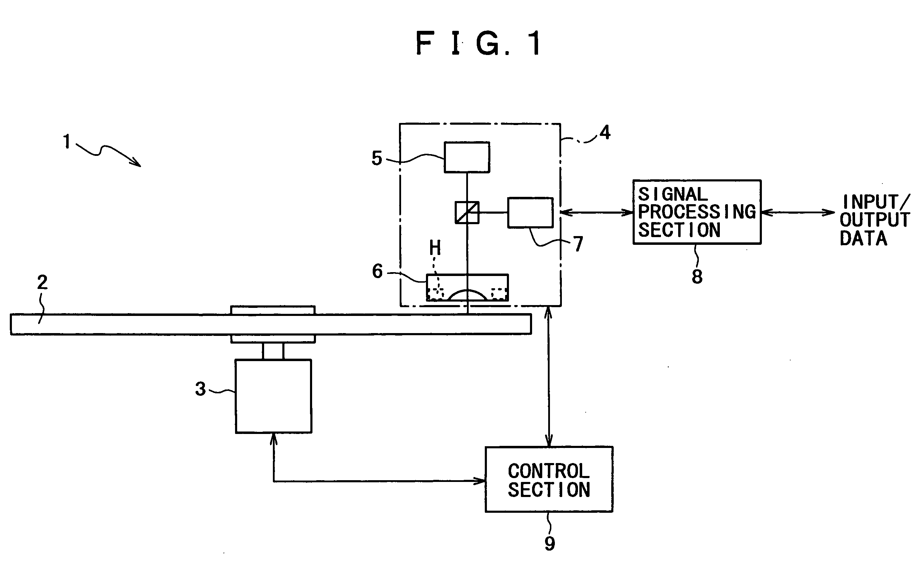

FIG. 1 is a schematic view showing an example of a basic configuration of an information processing apparatus according to the present invention.

The information processing apparatus 1 includes a spindle motor as a rotating element 3 for rotating a disk-type recording medium 2. For the disk-type recording medium (hereinafter referred to simply as "disk") 2, ROM (Read Only Memory) media for read only and RAM media which allow writing and allow random accessing, for example, phase change type media (PC) and organic pigment type media and so forth are applicable. However, in applications of the present invention, any recording medium may be used.

An optical head apparatus 4 performs information recording or information reproduction on or from the disk 2 and includes a light source 5 provided for illumination of light on the disk 2. For example, a laser light source (laser diode) is used.

In the present invention, it is presupposed that the optical head apparatus 4 has a flying head structure which makes use of air flows produced by rotation of the disk 2. In particular, the optical head apparatus 4 includes a slider 6 which is flown by air flows produced by rotation of the disk 2. The slider 6 is flown by an air layer (air, nitrogen or the like) between the slider 6 and the disk 2, and an optical system including an objective lens is disposed on the slider 6. It is to be noted that, where the magneto-optical recording method is used, a magnetic field generation element (H portion indicated by a broken line) is carried on the slider as hereinafter described.

Returning light from the disk 2 is detected by a light reception element 7 and signaled to a signal processing section 8. It is to be noted that the signal processing section 8 performs a demodulation process of reproduction data, a modulation process of recording data, an ECC (error correction code) process, a decoding process of address information and so forth.

A control section 9 performs spindle servo control for driving control of the rotating element 3, position control of the optical head apparatus 4 in a radial direction of the disk 2, focusing control of the optical system including the objective lens and so forth. In addition, the control section 9 includes a power control circuit for the laser light source and so forth.

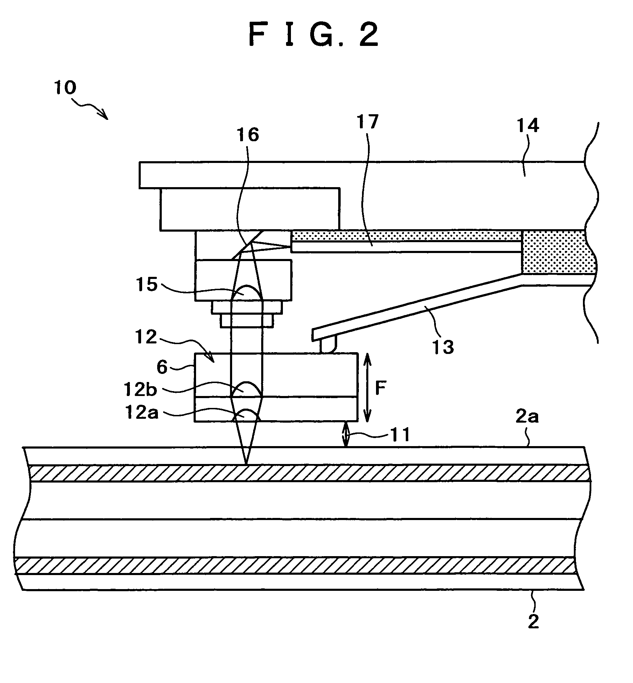

FIG. 2 schematically shows a configuration example 10 of the optical head apparatus having a flying head structure.

The flying slider 6 formed from a transparent material such as glass is configured such that it is placed into a state flown with a certain distance by air flows produced by rotation of the disk 2 and a face of the slider 6 (the face is hereinafter referred to as "bottom face") opposing to a disk face 2a keeps a predetermined posture. In short, a flown state of the slider 6 is kept by an action of an air bearing formed by an air layer 11 (shown in an exaggerated fashion in the figure) formed between the slider 6 and the disk 2 upon rotation of the disk 2, and head position control in a focusing direction (refer to an arrow mark "F" in the figure) is performed.

While, in the present example, an optical system 12 provided on the slider 6 is formed as a condensing lens system including two lenses 12a and 12b, the optical system 12 is not limited to this but may have a form of a configuration wherein only one objective lens is provided on a slider.

The slider 6 is supported by a support member (suspension) 13 formed from a resilient material such as metal. For example, in a form which uses a gimbal structure, a slider is supported for pivotal motion around axes perpendicular to each other.

A collimator lens 15 and a mirror 16 are disposed at a base 14 provided in an opposing relationship to the slider 6 on the opposite side to the disk 2. Beam light emitted from a light source element not shown is subject to a change in optical path by the mirror 16 through a light introduction member 17 such as an optical fiber and then passes through the collimator lens 15 to form parallel light. Then, the light is illuminated toward a recording layer of the disk 2 through the optical system 12. On the other hand, returning light from the disk 2 follows the reverse path and arrives at and is photoelectrically converted by a light detection element not shown.

The slider 6 moves in a disk radial direction in a state flown from the rotating disk 2. For example, as a feeding mechanism for the head section, a configuration which uses a mechanism that includes a guide shaft extending in parallel to a disk radial direction and a carriage (or a movable base) provided for sliding movement along the guide shaft and a driving source (voice coil motor or the like) for providing propelling force to the carrier can be applied.

It is to be noted that, while, in the present example, a double-sided recording or reproduction type recording medium wherein a recording layer is formed on each of the surfaces of the disk 2 is provided, the recording medium is not limited to this. However, the present invention can naturally be applied to a form wherein a recording medium of the one-sided type in which a recording layer is formed on only one face of a disk is used.

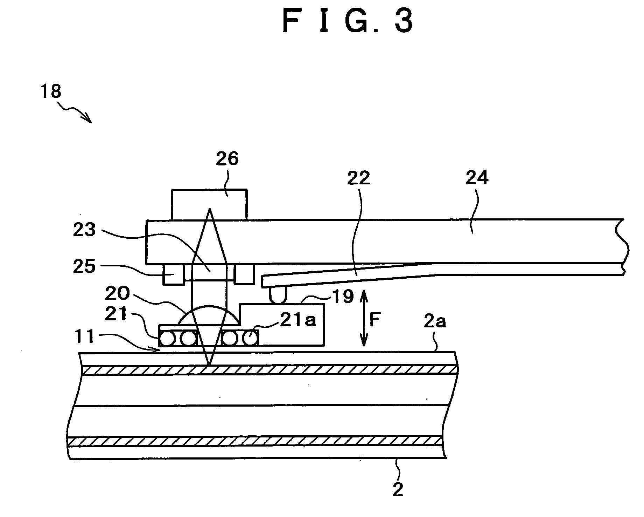

FIG. 3 schematically shows a configuration example 18 of the head apparatus where a magneto-optical (MO: Magneto Optical) disk is used as the disk 2.

In applications to the magnetic field modulation method and so forth, an objective lens 20 and a magnetic field generation section 21 are provided on a slider 19. For example, a magnetic field modulation coil 21a which forms the magnetic field generation section 21 is carried in an opposing relationship to the magnetic field generation section 21 on the slider 19 as seen in the figure. It is to be noted that supply of electric current to the magnetic field modulation coil 21a is controlled by a drive circuit not shown.

A resilient material such as a metal is used for a support member (suspension) 22 of the slider 19, and the slider 19 is attached to an end portion of the support member.

A collimator lens 23 provided in an opposing relationship to the objective lens 20 on the slider 19 on the opposite side to the disk 2 is provided on a member 24 formed from a transparent base. The position of the collimator lens 23 in a focusing direction indicated by an arrow mark F is controlled by a driving means 25. It is to be noted that an actuator of the electromagnetic type or the piezoelectric type is used for the driving means 25, and correction in the focusing direction is performed by the position control of the collimator lens 23.

An integrated type optical element such as, for example, an LD (laser diode) coupler is used for a light sending and receiving element 26, and has a structure wherein a light emitting element and a light receiving element are accommodated in the inside. Beam light emitted from the light emitting element (laser diode) in the light sending and receiving element 26 passes through the collimator lens 23 to form parallel light, and the light is illuminated toward a recording layer of the disk 2 through the objective lens 20. On the other hand, returning light from the disk 2 follows the reverse path and arrives at and is photoelectrically converted by the light detection element (photo-detector) in the light sending and receiving element 26.

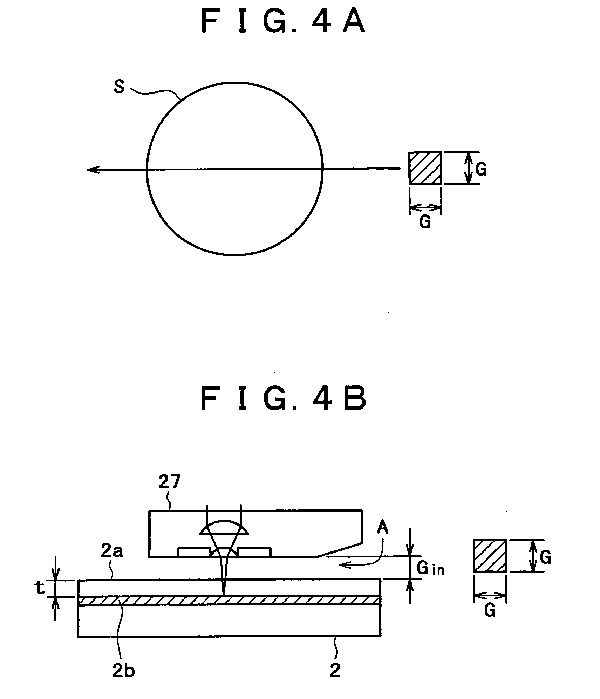

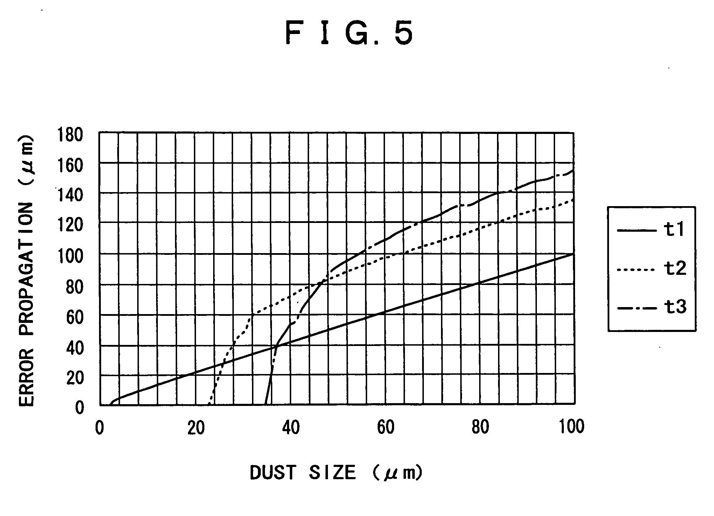

Before a configuration of the slider according to the present invention is described, an influence of a foreign particle entering a gap between a flying slider and a disk is described with reference to FIGS. 4 and 5.

Referring to FIG. 4, FIG. 4A conceptively shows the area of a beam condensed by the objective lens and the foreign particle size, and FIG. 4B schematically illustrates a relationship between an air inlet port formed between the disk 2 and a slider 27 and the foreign particle size.

Reference character "S" shown in FIG. 4A represents the beam shape (circular shape) and the area of the beam (area of the beam projected on the disk face), and a foreign particle is shown in a form modeled as a square shape having a side of a length "G" (in particular, although foreign particles have variable shapes, when an influence of a beam spot on a disk face is to be taken into consideration, not the volume of the foreign particle but the area of the foreign particle as viewed from the disk face matters, and therefore, it is assumed that a square shape having an area equal to the area of a foreign particle is an equivalent shape of the foreign particle).

If a foreign particle enters a gap between a flying slider and a disk and crosses the beam as indicated by an arrow mark in FIG. 4A, then an optically bad influence occurs and makes a cause of a defect.

Reference character "Gin" shown in FIG. 4B represents the size (gap length) of the air inlet port formed between the disk 2 and the slider 27 and is, for example, approximately 0.5 to 1 μm. Meanwhile, "t" represents the cover coat layer thickness (for example, approximately 10 to 20 μm) and indicates the thickness from a recording layer 2b to the disk face 2a.

As described hereinabove, a foreign particle modeled as a square of one side "G" as described above passes the gap between the slider and the disk surface where it is smaller than the gap length "Gin" (G < Gin) and has an influence on the beam in accordance with the foreign particle size.

As indicated by an arrow mark A, as a condition for causing an error not to be generated by an influence of a foreign particle entering from the air inlet port, a lower limit value to the cover coat layer thickness "t" can be calculated from the following expression:

[Expression 1]

$$t \geq \frac{G}{\sqrt{K \cdot \pi} \cdot \left( \tan\left( \sin^{-1}\left( \frac{NA}{n} \right) \right) \right)}$$

It is to be noted that "NA" in the expression above represents the numerical aperture of the optical system including the objective lens, "n" the refractive index of the cover coat layer, "sin" the inverse sine function with "-1" added to the right shoulder, and "tan" the tangent function. Further, "K" represents the ratio between the beam area and the foreign particle area (the maximum area ratio between them is used as an index representative of the detection capacity of the disk drive apparatus). In short, K is defined as an amount obtained by dividing the second power of G (foreign particle area) described above by the beam area S as given by the following expression:

[Expression 2]

$$K = \frac{G^2}{S}$$

$$S = \pi \cdot \left( t \cdot \tan\left( \sin^{-1}\left( \frac{NA}{n} \right) \right) \right)^2$$

Although detailed description regarding a process of derivation of the [Expression 1] is omitted herein, an inequality relating to the cover coat layer thickness "t" is obtained from "NA", the beam diameter determined from a relational expression of the incident angles of the beam to the cover coat layer and the recording layer, a transformed expression "$G^2=K \cdot S$" of the [Expression 2] and a conditional expression "$Gin \leq G$ " relating to prevention of appearance of an error (that is, the foreign particle size is greater than the gap length).

FIG. 5 is a graph illustrating a relationship between the foreign particle size and the occurrence of errors. The axis of abscissa indicates the foreign particle size (unit: μm) while the axis of ordinate indicates the error propagation (unit: μm). It is to be noted that the "error propagation" indicates a physical length within a range within which an error continuously appears in a signal and is defined as the length of a range within which, where the level of the reproduction RF (Radio Frequency) signal is compared with a threshold value (Error threshold) determined in advance for the K value, the signal level is lower than the threshold value.

The present figure illustrates three different cover coat layer thicknesses indicated by t = t1, t2 and t3, and "t1 < t2 < t3".

As can be seen from FIG. 5, as the cover coat layer thickness "t" decreases, even if the foreign particle is small, an influence thereof appears. For example, where t is t1, even a foreign particle of 20 μm or less causes an error. It is to be noted that, where t = 10 to 20 (μm), the limit value with which no error appears is approximately 2 to 6 μm (the limit value increases as the t value increases).

Regarding the influence of a foreign particle entering the groove between the rail elements on the bottom face of the slider shown in FIG. 25 or 26, where the cover coat layer thickness "t" is small, even if the foreign particle is small, an error is likely to appear.

Therefore, according to the present invention, a different rail element or a protrusion is formed between parallel rail elements formed on the bottom face of a slider such that beam light may pass through this portion. For example, a form wherein three parallel rail elements are provided on the bottom face of a slider and another form wherein a protrusion is provided between two rail elements formed on the bottom face of a slider are available.

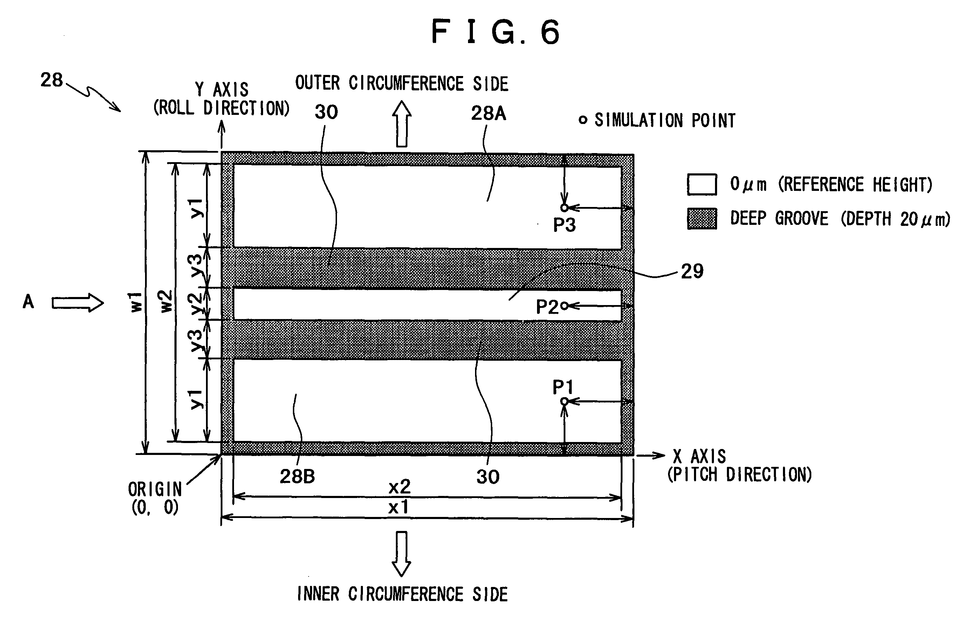

FIG. 6 is a bottom plan view showing an example of a shape of a slider and shows an example of the configuration wherein three rail elements are formed. It is to be noted that, setting an inflow direction of air indicated by an arrow mark A as a reference, the X axis is set to the pitch direction of the slider and the Y axis is set to the roll direction. The Z axis is set to the thicknesswise (heightwise) direction of the slider, and the origin of the coordinate system is set to the left lower corner of the slider. Further, the direction to an outer circumference and the direction to an inner circumference of the disk are indicated individually by thick arrow marks.

On the face (bottom face) of a slider 28 formed from a transparent material such as glass which is opposed to the disk, a first rail element 28A and a second rail element 28B paired with each other and extending in parallel to each other are formed such that flying force for the slider 28 is obtained by them. A third rail element 29 is formed in the middle between the two rail elements. It is to be noted that reference character "y1" shown in the figure indicates the width of the rail elements 28A and 28B in the Y axis direction and is, for example, approximately 0.6 to 0.7 mm. While, in the present example, the rail elements 28A and 28B have an equal width in the roll direction, also another form wherein the widths of the rail elements are different from each other is possible.

Reference character "w1" indicates the width of the slider 28 in the Y axis direction, and "w2" indicates the distance between a side face (outer circumference side) of the rail element 28A positioned on the outer circumference side of the disk and a side face (inner circumference side) of the rail element 29B positioned on the inner circumference side of the disk.

The rail element (center rail) 29 extends in the direction of an air flow in the middle in the widthwise direction between the rail elements 28A and 28B and has a width smaller than the width of the other two rail elements. In short, the width "y2" (for example, approximately 2 mm) in the Y axis direction is smaller than the width "y1" in the Y axis direction of the rail elements 28A and 28B. An air flow divided into two air flows by the third rail element 29 is formed smoothly between the rail element 29 and the rail elements 28A and 28B. It is to be noted that reference character "y3" indicates the width (approximately 0.2 to 0.4 mm) in the Y axis direction of grooves 30, 30 formed between the rail element 29 and the rail elements 28A and 28B.

Reference character "x1" indicates the length of the slider 28 in the X axis direction, and "x2" indicates the length of the rail elements in the X axis direction. In the present example, the rail elements 28A, 28B and 29 have an equal length in the X axis direction which is, for example, approximately 2.6 to 2.8 mm.

The difference in height (difference in the Z axis direction) between the rail elements 28A, 28B and 29 and the other portions is set to approximately 20 μm taking the cover coat layer thickness and so forth into consideration. In the present example, the heights of the rail elements are substantially equal to each other (accurately, the bottom faces of the rail elements 28A and 28B are spherically polished so that they have a spherical shape projecting a little to the disk face side). However, they need not substantially equal to each other, but another configuration form may be used wherein the height of the middle rail element 29 is set lower than the height of the rail elements 28A and 28B with reference to the grooves formed between the rail elements 28A and 28B so that an offset is provided between the middle rail element 29 and the rail elements 28A and 28B (the middle rail element becomes less likely to be damaged by an influence of a foreign particle).

Beam light condensed by the objective lens is illuminated on the disk through the rail element 29. In the present example, taking it into consideration that a stable posture in the pitch direction can be obtained readily at a position on the downstream side of air flows, the passing position of the beam light is set not to the center of the rail element 29 in the X axis direction but to a place displaced to the downstream side (rightwardly in the figure) of air flows. (Naturally, the passing position of the beam light is not limited to this, but an arbitrary position on the X axis can be selected on the rail element 29.)

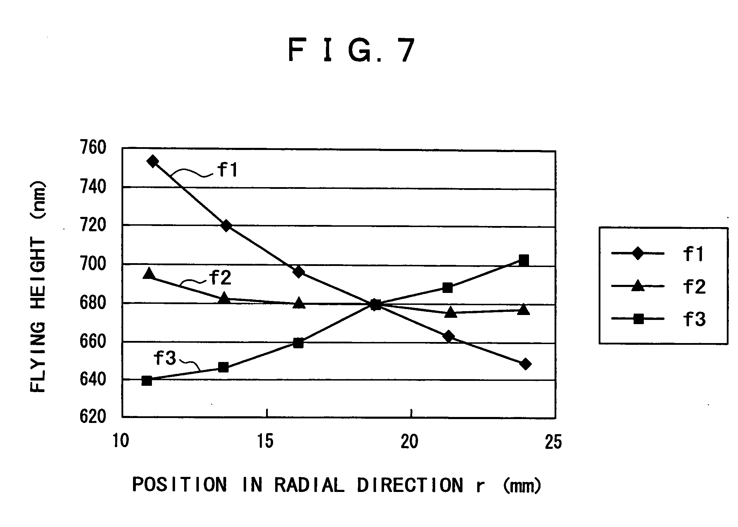

FIG. 7 is a graph illustrating a reason why the condensed light beam by the objective lens passes the center portion of the slider 28 in the roll direction (Y axis direction). The axis of abscissa indicates the position in a radial direction of the disk (unit: mm) and the axis of ordinate indicates the flying height (unit: nm) of the slider, and a simulation result is illustrated. (A simulation result wherein the variation in height is great is shown so as to facilitate understanding.) It is to be noted that three points including points P1 (a point on the rail element 28B), P2 (the beam passing point on the rail element 29) and P3 (a point on the rail element 28A) are taken as simulation points as seen in FIG. 6. (Three cases wherein graph curves f1, f2 and f3 correspond to the points P1, P2 and P3, respectively, are indicated.)

As can be recognized from the graph curve f2, the variation of the position (flying height) at the middle portion in the widthwise direction of the slider 28 is the smallest. This is the reason why the condensed light beam passes through the rail element 29. It is to be noted that the roll posture differs depending upon whether the slider is positioned on an inner circumference of the disk or on an outer circumference of the disk.

The simulation result of the air flows or the pneumatic pressure distribution with regard to the bottom face shape of the slider shown in FIG. 6 is examined below. There is the possibility that foreign particles and so forth may flow into the deep groove portions formed between the rail elements. Accordingly, it is effective as a countermeasure against foreign particles to cause a beam condensed by the objective lens to pass through the rail element 29.

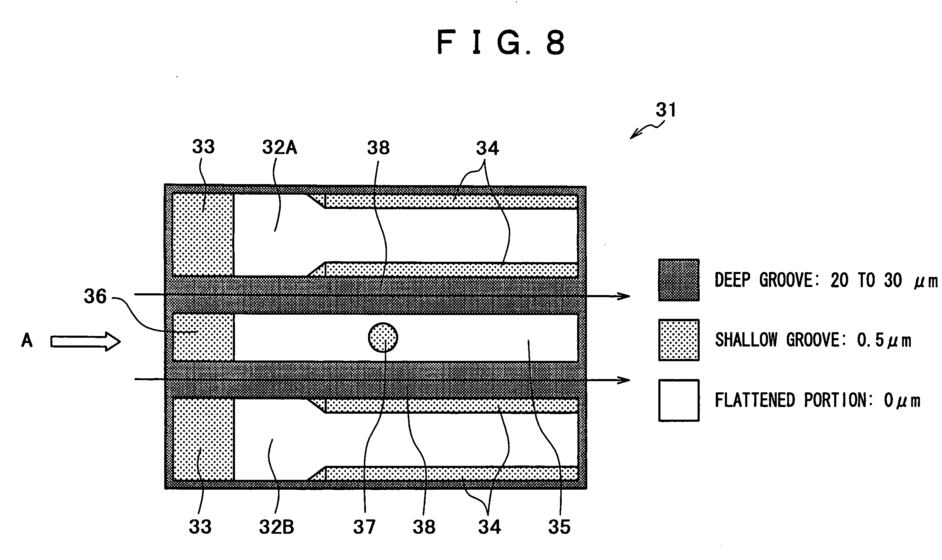

FIG. 8 is a bottom plan view showing an example of a shape of a slider having three rail elements. The figure shows an example wherein grooves having two stages (a shallow groove and a deep groove) are formed taking a reference of zero at the height of the rail elements.

Of the three parallel rail elements, the two rail elements 32A and 32B positioned adjacent ends in the widthwise direction of a slider 31 with reference to the air inflow direction A have a substantially equal width and length. Each of the rail elements has formed thereon a shallow groove (range indicated by a satin pattern) of approximately 0.5 μm deep with reference (0 μm) to a flat face (range of a white pattern) of the rail element. In short, shallow grooves 33, 33 are formed at air inflow side (upstream side) portions of the rail elements taking the flying force by an air flow and so forth into consideration. Further, portions of the rail elements adjacent the opposite side edges are formed a little lower to form shallow grooves 34, 34, ....

On a rail element 35 formed at the center in the widthwise direction of the slider 31 with reference to the air inflow direction A, that is, at the rail element positioned in the middle between the rail elements 32A and 32B and having a smaller width than these rail elements, a shallow groove 36 of approximately 0.5 μm deep is formed at a location rather near to the air inflow side (range indicated by a satin pattern) with reference (0 μm) to the flat portion of the rail element. Further, a circular frame 37 shown at the center of the rail element 35 in the longitudinal direction indicates a passage of a beam condensed by an objective lens. (A beam diameter is shown in an exaggerated manner.)

At peripheral portions of the rail elements and between the rail elements, deep grooves 38, 38 of, for example, 20 to 30 μm deep with reference (0 μm) to the flat faces of the rail elements are formed, and an air flow flowing in each of the deep grooves formed between the rail element 32A and the rail element 35 and between the rail element 32B and the rail element 35 is indicated by an arrow mark.

According to the present configuration, where the flying height of the slider 31 is, for example, approximately 1 μm, it is possible to design the slider so that, even if some foreign particle enters the gap between the bottom face of the slider and a face of the disk, an error may not be caused by the foreign particle.

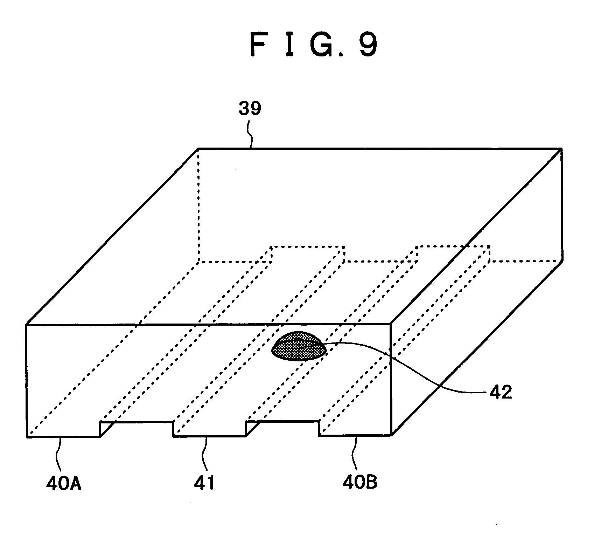

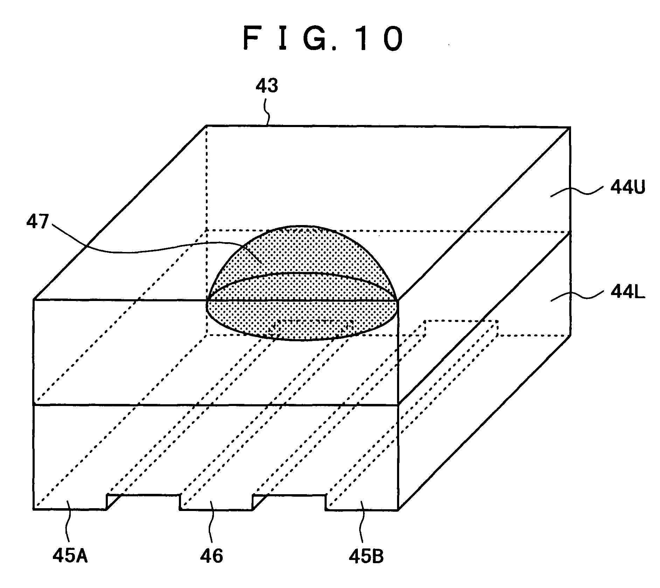

FIGS. 9 and 10 are perspective views showing examples of the shape of a slider having three rail elements and having a lens (single lens) provided thereon, and a glass material is used for the sliders.

In the example shown in FIG. 9, an example of a configuration is shown wherein a lens 42 is provided on a central rail element 41 from among three rail elements 40A, 40B and 41 formed on the bottom face of the slider 39.

Meanwhile, FIG. 10 shows an example of a configuration which has a two-layer structure. In particular, three rail elements 45A, 45B and 46 are formed on a bottom face of a lower layer part 44L which forms the slider 43. Further, a lens 47 is provided on a upper layer part 44U which forms the slider 43, and the upper layer part 44U and the lower layer part 44L are adhered to each other to form a slider.

It is to be noted that, while the substrate of the slider 39 or 43 is formed from a transparent material taking the transmittance of beam light therethrough into consideration. Preferably the substrate is formed from a glass type material where the cost and so forth are taken into consideration. To make the slider 39 or 43 less liable to be influenced by a foreign particle, a damage or the like, preferably sapphire, quartz, magnesium fluoride or the like is used from the point of view of the hardness and so forth. Further, the lens is formed by forming a recessed portion on a substrate and filling the recessed portion with a transparent material having a refractive index different from that of the transparent material used for the substrate, and a spherical lens or an aspherical lens can be produced thereby.

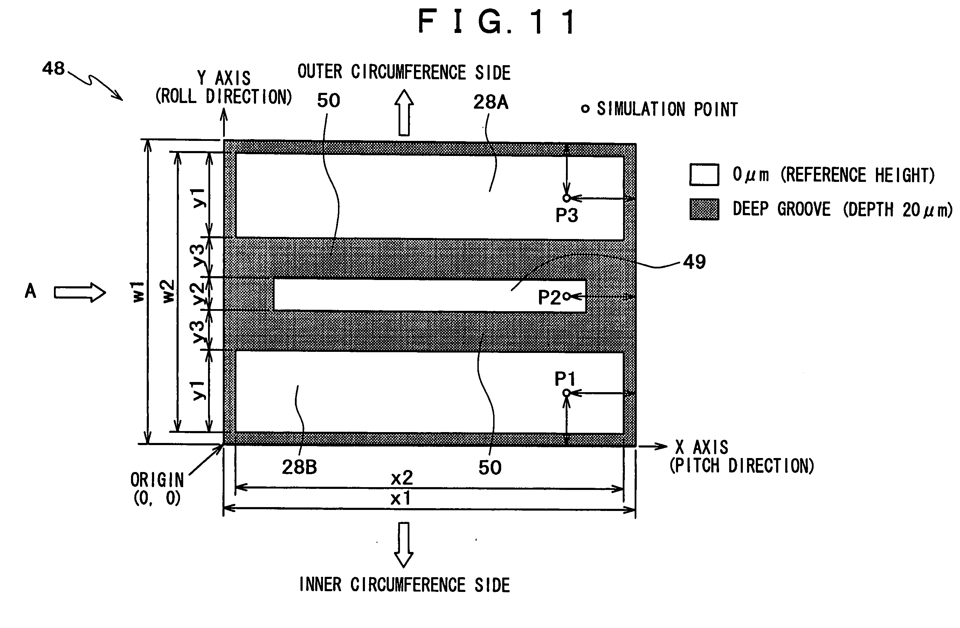

FIG. 11 is a bottom plan view showing a shape example 48 of the slider and shows an example of a configuration wherein three rail elements are formed. It is to be noted that the significance of an arrow mark A and the setting of the X axis and the Y axis are such as those described hereinabove with reference to FIG. 6.

The difference from the configuration shown in FIG. 6 is that a rail element 49 is formed shorter in the X-axis direction (pitch direction) (accordingly, in the present example, like portions to those shown in FIG. 6 are denoted by like reference characters and description thereof is omitted herein).

Groove 50, 50 are defined by the rail element 49 positioned between the rail elements 28A and 28B, and the rail element 49 is shorter at the positions thereof on the upstream side and the downstream side of an air flow than the rail elements 28A and 28B. In short, the end portion of the rail element 49 on the upstream side is retracted to the downstream side with respect to the end portions of the rail elements 28A and 28B, and an advantage that it has a less influence on the introduction of the air flow, the flying force and so forth and the stability upon floating is high.

It is to be noted that, also in the present example, spherical polishing is applied to the bottom faces of the rail elements 28A and 28B and the passage of a beam on the rail element 49 is set to a tail portion (position on the downstream side, refer to a point P2).

The configuration example described above has a form that three rail elements are provided on the bottom face of the slider and the rail element having a smaller length than the first and second rail elements (flying rail elements) in the air inflow direction is formed on the slider. However, the form of the configuration is not limited to this, but, for example, other forms of a configuration wherein a protrusion is formed in the middle between the first and second rail elements are possible as described below.

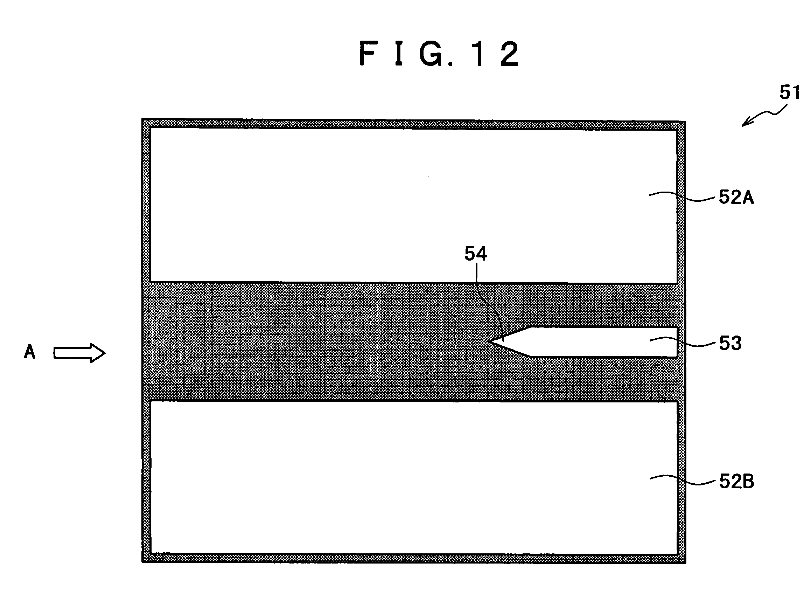

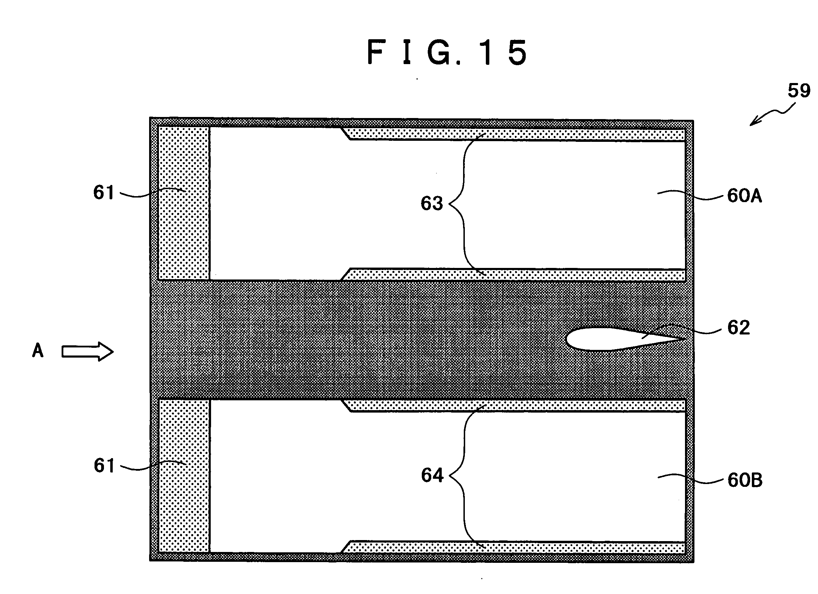

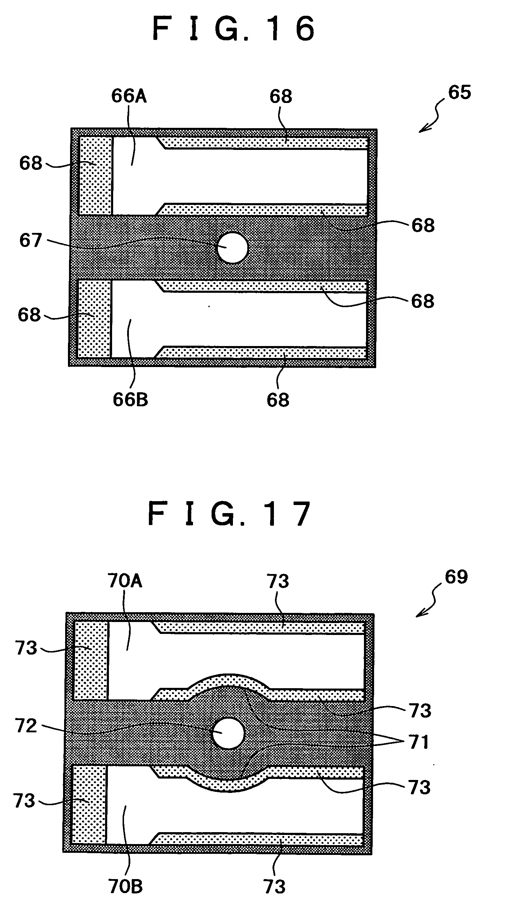

- Form wherein a wedge-shaped or streamline-shaped protrusion is provided between the first and second rail elements (refer to FIGS. 12 and 15)
- Form wherein a post-like protrusion is provided between the first and second rail elements (refer to FIGS. 16 and 17)

For example, a slider 51 shown in FIG. 12 has the following characteristics.

- The bottom faces of flying rail elements 52A and 52B paired with each other are spherically polished (radius of curvature: approximately 5 m).
- An air flow which flows between the flying rail elements 52A and 52B is branched into two air flows by a protrusion 53.
- An end of the protrusion 53 on the upstream side is formed as an acute angle portion.

In the present example, the protrusion 53 formed with a small width is provided at a position on the downstream side on the bottom face of the slider, and the end portion 54 on the upstream side is formed in a triangular shape (whose apical angle is an acute angle) as viewed in a direction perpendicular to the disk surface while the other portion is formed in a rectangular shape.

It is to be noted that, where the height of the flying rail elements 52A and 52B is taken as a reference, the depth of the groove formed between the two rail elements is, for example, approximately 20 μm.

Further, where the height of the flying rail elements 52A and 52B is taken as a reference, the height of the protrusion 53 is lower by approximately 0.3 to several μm. In particular, in the present example, as the height of the protrusion 53 is set lower than the height of the flying rail elements 52A and 52B, an offset is formed between the protrusion 53 and the flying rail elements 52A and 52B and the stability of the slider 51 upon floating is improved. Consequently, an effect that the protrusion 53 is less likely to be influenced by foreign particles, damage or the like to the beam path is obtained.

Since there is no necessity that the rail elements and the protrusion on the bottom face of the slider be equal to each other in this manner, the middle rail element or protrusion may be formed lower than the flying rail elements.

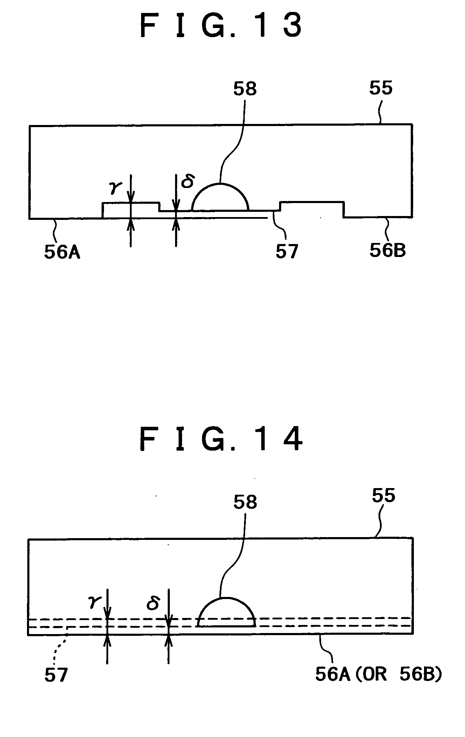

FIG. 13 schematically shows a front elevational view of a slider 55 as viewed from a direction along an air flow, and FIG. 14 schematically shows a side elevational view of the slider 55 as viewed from the roll direction.

A rail element or protrusion 57 is formed between flying rail elements 56A and 56B, and a lens 58 is provided on the rail element or protrusion 57.

The heights of the rail elements 56A and 56B are equal to each other, and reference character "γ" denotes the depth of grooves formed between the two rail elements and the rail element or protrusion 57.

Further, the height of the rail element or protrusion 57 is a little lower than the height of the rail elements 56A and 56B, and reference character "δ" appearing in the figures denotes an offset formed between the rail elements 56A and 56B and the rail element or protrusion 57.

The offset increases the size of a foreign particle which can enter between the slider and the disk.

However, it is known that, for example, if the cover coat layer thickness of the disk is approximately 20 μm, then an error is not caused by a foreign particle having a particle size smaller than 5 μm in a relationship between the particle size of the foreign particle and the error propagation. Accordingly, preferably the offset value is designed by determining a limit value to the particle size with which no error is caused taking the cover coat layer thickness into consideration.

It is to be noted that, in a form wherein the height of the rail element or protrusion 57 is set lower than that of the flying rail elements 56A and 56B for the flying as in the present example, the influence (reduction of the power and so forth) of the variation of the flying height of the slider on the condensed beam can be reduced without damaging the effect of the countermeasure against the foreign particles. Further, since the flying height of the slider depends upon the distance between the flying rail elements 56A and 56B and the disk surface, if the gap between the bottom face of the rail element or protrusion 57 and the disk surface is set greater than the distance, then a space greater as much is provided. (The rail element or protrusion can be protected so as not to be damaged by a foreign particle or the like.)

Then, with a slider of the type which is configured such that the bottom face of the flying rail element is formed as a curved face convex to the disk side and is, for example, spherically polished, an advantage is achieved that the lowest value of the flying height is not likely to be lowered by generation of torque originating from a dispersion in mounting (in the roll direction, pitch direction and flying height direction) of a suspension on which the slider is supported or torque in the roll direction or pitch direction exerted by the suspension itself. This arises from the fact that, since the bottom faces of the rail elements are spherical phases convex to the disk side, even if some torque is applied to the slider, the lowest point is always given by one point of the spherical face.

Now, a slider having a flat face on a rail element thereof is described.

A slider 59 shown in FIG. 15 has the following characteristics.

- Each of the bottom faces of rail elements 60A and 60B paired with each other is formed to have a flattened face at the most part thereof, and shallow grooves 61, 61 are formed individually at positions on the upstream side of air flows.
- An air flow which flows between the rail elements 60A and 60B is divided into two air flows by a protrusion 62.
- The protrusion 62 has a streamline shape as viewed from a direction perpendicular to the bottom face of the slider.

In the present example, the protrusion 62 of a streamline shape is provided at a position on the downstream side on the bottom face of the slider so as to provide a configuration which exhibits low resistance to the air flow.

Further, where the height of the rail elements 60A and 60B is determined as a reference, the protrusion 62 has a height lower by approximately 0.3 to several μm to form an offset between the protrusion 62 and the rail elements 60A and 60B. (An effect that the stability of the slider upon floating is improved and the protrusion is less liable to be influenced by a foreign particle, damage and so forth to the beam passage.)

It is to be noted that, where the height of the rail elements 60A and 60B is taken as a reference, the depth of the grooves formed between the rail elements and the protrusion 62 is, for example, approximately 20 μm.

Further, the shallow grooves 61 and 62 of approximately 0.5 μm deep are formed at end portions of the rail elements 60A and 60B on the upstream side taking the flying force into consideration.

Further, the shallow grooves 63, 63 of approximately 0.5 μm deep are formed at side edge portions of the rail element 60A in the longitudinal direction (pitch direction), and similarly, the shallow grooves 64, 64 of approximately 0.5 μm deep are formed at side edge portions of the rail element 60B in the longitudinal direction. By the formation of the shallow grooves, the width of the rail element 60A and the width of the rail element 60B in the disk radial direction become different from each other. In other words, the difference in linear velocity at positions on the disk corresponding to the rail elements is taken into consideration so as to obtain a uniform flying amount thereby to achieve stabilization of the roll posture. (Since the linear velocity is higher on the outer circumference side of the disk, the width of the rail element on the outer circumference side (width except the shallow grooves) is relatively reduced in the roll direction in order to decrease the flying amount.)

According to the slider of the flat type wherein a flat face is formed on the bottom of each rail element as in the present example, for example, the following advantages are obtained.

- The slider is superior in the roll characteristic and the variation in roll posture between the inner circumference and the outer circumference of the disk (inclination of the slider in the widthwise direction) is small.
- Even if torque arising from a dispersion in assembly (in the roll direction, pitch direction or flying height direction) of a suspension for supporting the slider or torque in the roll direction or pitch direction which the suspension itself has is applied to the slider, the variation in the roll direction or the pitch direction is comparatively little.
- The variation of the flying height when a protrusion on the disk is exceeded is comparatively little.

It is to be noted that, since various forms are available for the protrusion, for example, such a configuration form that the protrusion 53 of FIG. 12 and the protrusion 62 of FIG. 15 are exchanged for each other is possible.

Now, sliders having a cylindrical protrusion are described.

In a slider 65 shown in FIG. 16, a cylindrical protrusion 67 is provided between rail elements 66A and 66B. It is to be noted that the rail elements 66A and 66B are of the flat type similarly to those in the example of FIG. 15, and shallow grooves 68, 68, ... are formed at end portions on the upstream side and the opposite side edge portions.

Meanwhile, in a slider 69 shown in FIG. 17, a curved concave face 71 (such as a cylindrical face) is formed on the inner side face portion of each of rail elements 70A and 70B so that air can smoothly flow between the concave faces 71 and a side face of the protrusion 72 so that foreign particles may not be accumulated in the proximity of the passage of a beam. It is to be noted that the rail elements 70A and 70B are of the flat type similar to those in the example of FIG. 15, and shallow grooves 73, 73, ... are formed at end portions on the upstream side and the opposite side edge portions.

Any of the forms described above is configured so that a condensed light beam by an objective lens passes through the protrusion (53, 62, 67 or 72).

Incidentally, in a state wherein the slider is flown from the disk face, it has a posture inclined in the pitch direction. In short, the slider assumes a posture that an upstream side portion thereof is flown relatively from the disk face more than a downstream side portion of the slider by an air flow. If a lens formed on a rail element or the protrusion is inclined by the inclined posture of the slider, then this can possibly give an optical influence.

Therefore, in the state wherein the slider is flown by an air flow produced by rotation of the disk, the slider preferably has a posture that the opposing face of each rail element or the protrusion to the disk is substantially parallel to the surface of the disk.

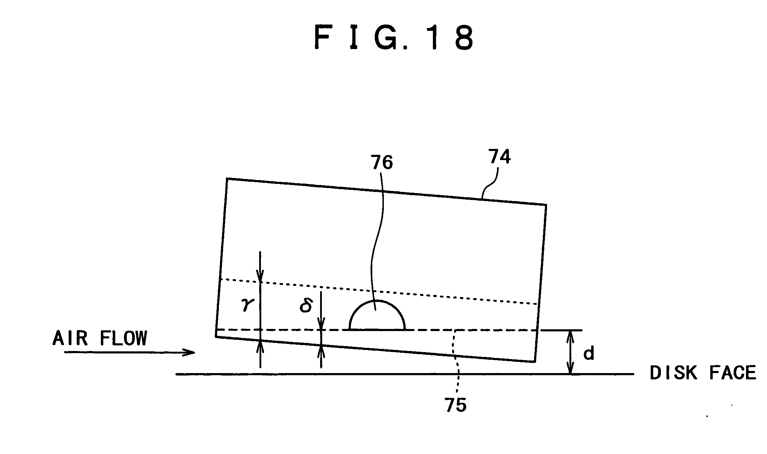

FIG. 18 schematically illustrates a state wherein a slider 74 is flown by an air flow produced by rotation of a disk and shows the thickness of the slider in an exaggerated fashion. It is to be noted that reference character "d" denotes the distance between the disk face and a rail element 75 (a middle rail element provided between the flying rail elements).

Since the face (refer to a broken line) of the rail element 75 through which beam light condensed by an objective lens 76 passes extends substantially in parallel to the disk face, the objective lens 76 is not inclined with respect to the disk face. In particular, the offset "δ" formed between the rail element 75 and the flying rail elements on the opposite sides of the rail element 75 is not fixed but increases toward the downstream along the pitch direction of the slider (in the figure, the variation of "δ" in the pitch direction and the groove depth "γ" are shown in an exaggerated fashion). The slider 74 is designed so that the lens face may be maintained in a state parallel to the disk face taking the pitch posture in the flown state of the slider into consideration.

Subsequently, a working method and so forth for the bottom face of the slider described hereinabove are described.

Preferably, a material harder than a material from which the slider is formed is used for the bottom face of the slider to protect the bottom face from foreign particles and so forth.

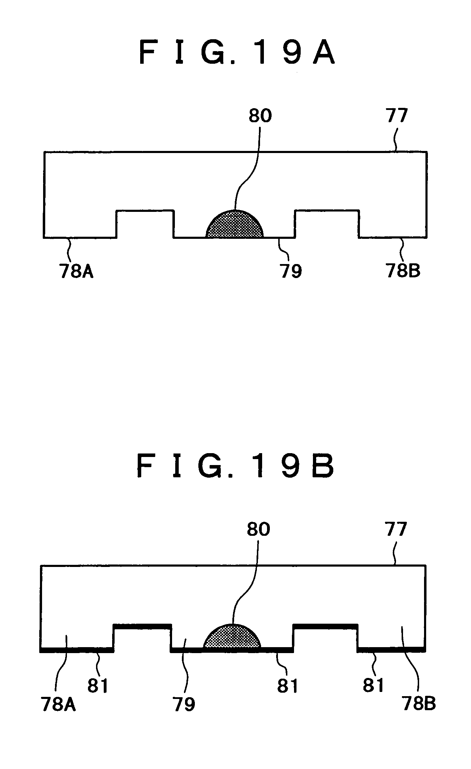

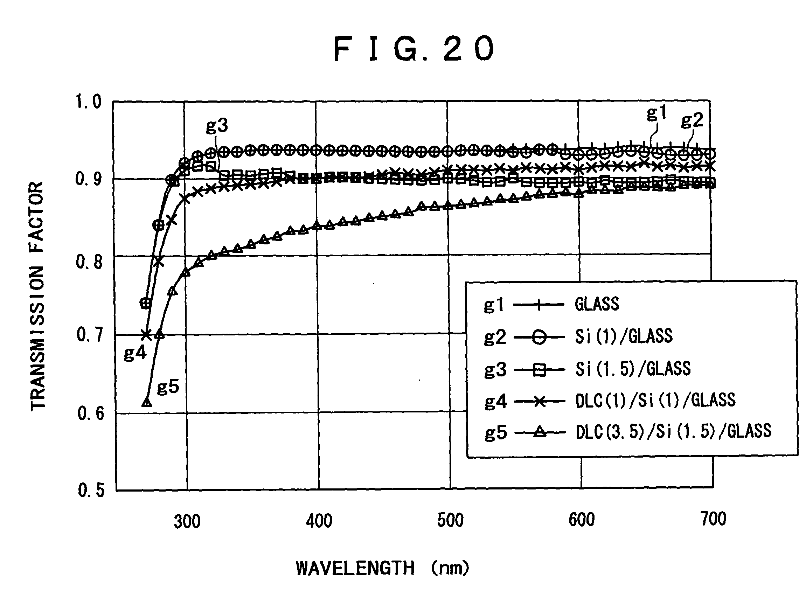

FIGS. 19A, 19B and 20 illustrate various modes.

FIG. 19 illustrates an example wherein a protective layer of DLC (diamond-like carbon) is formed on the bottom face of a slider.

FIG. 19A illustrates a state before DLC is formed on the bottom face. Rail elements 78A and 78B and a rail element or protrusion 79 are formed on the bottom face of a slider 77 made of glass, and a lens 80 is formed at a portion (79) positioned in the middle between the rail elements 78A and 78B.

FIG. 19B illustrates a state wherein DLC 81 is coated on the bottom face of the slider 77. It is necessary for the thickness of the DLC to have a value with which the DLC does not have an optical influence. (This point is hereinafter described.)

As other materials having a high hardness than DLC, alumina ($Al_2O_3$), quartz and so forth are available, and, for example, they are formed as a deposited film on the bottom face of the slider.

It is to be noted that, where a hard material is used for coating on an opposing face of the slider to the disk, a form wherein coating is performed over the overall area of the opposing face and another form wherein coating is performed for part (rail elements or the like) of the opposing face are available.

FIG. 20 is a graph illustrating an influence on the transmission factor where a protective layer of DLC or the like is formed on the bottom face of a slider, and the axis of abscissa indicates the wavelength (unit: nanometer (nm)) and the axis of ordinate indicates the transmission factor (0.5 to 1) and a relationship between them is illustrated.

Conditions for samples used are such as described below.

(1) A case wherein only a glass material is used (refer to a graph curve g1)
(2) Another case wherein a sample in which Si (silicon) is formed with a thickness of 1 nm on the glass material of (1) is used (refer to a graph curve g2)
(3) A further case wherein a sample in which Si is formed with a thickness of 1.5 nm on the glass material of (1) is used (refer to a graph curve g3)
(4) A still further case wherein a sample in which DLC is formed with a thickness of 1 nm on the sample of (2) is used (refer to a graph curve g4)

(5) A yet further case wherein a sample in which DLC is formed with a thickness of 3.5 nm on the sample of (3) is used (refer to a graph curve g5)

As can be recognized from the figure, where the graph curves g1 and g2 are compared with each other, the two curves substantially coincide with each other. Where the thickness of Si is small, the transmission factors are little different from each other. However, with the graph curve 3, the transmission factor is lowered a little as a result of increase of the thickness. Where DLC is formed further, the transmission factor decreases when compared with the graph curve g2 as seen from the graph curve g4. However, it can be seen that, where the wavelength is higher than 400 nm, the degree of the decrease is little. However, it should be noted that, as the thickness of DLC increases, the transmission factor further decreases as seen from the graph curve g5 (particularly within a range within which the wavelength is equal to or shorter than 600 nm).

Taking such a result as described above into consideration, it is preferable to select a material having a comparatively insignificant optical problem and determine the thickness of the material. (For example, the transmission factor in a used wavelength is aimed to 0.9 or more.)

As regards sticking of a foreign particle, it is preferable to apply or coat a material having a lubricating action to the bottom face of the slider.

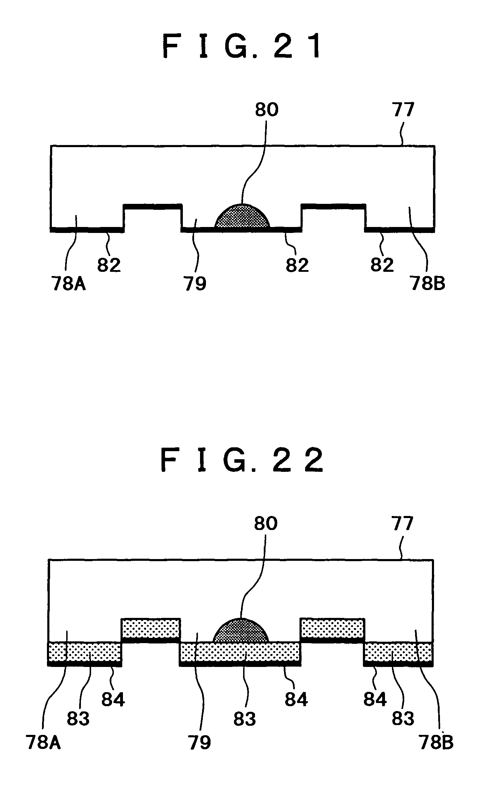

FIGS. 21 to 24 illustrate various modes.

FIG. 21 illustrates an example wherein a lubricating material is applied directly to the bottom face of a slider.

As the lubricating material, a fluorocarbon coating material or the like may be used, and a coating film 82 is formed by applying this to the bottom face of a slider 77. It is to be noted that the film thickness should be set to a value with which the coating film 82 does not have an optical influence similarly as described hereinabove.

FIG. 22 illustrates an example wherein a lubricating material is applied to a deposited film 83 of DLC, alumina, quartz or the like on the bottom face of a slider 77 to form a coating film 84.

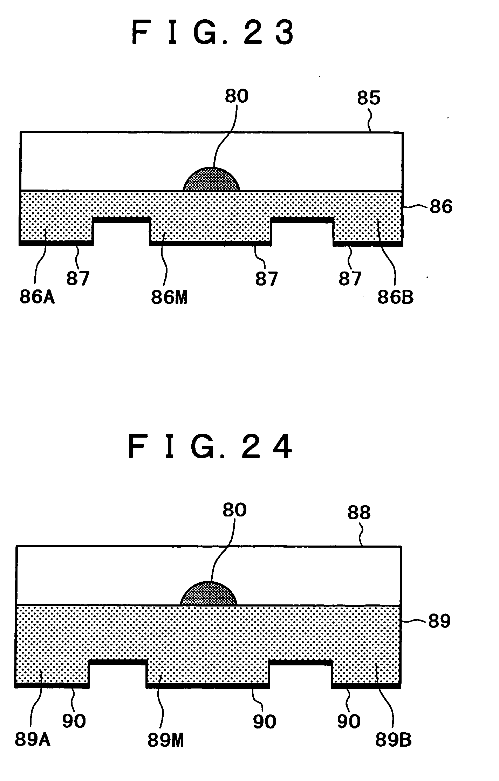

Further, as examples wherein the slider has a two-layer structure of a glass substrate and a bottom face portion on which rail elements are formed, configuration forms wherein the bottom face portion is formed from a deposited film of alumina, quartz or the like or a substrate are shown in FIGS. 23 and 24.

In FIG. 23, a bottom face portion 86 of a slider 85 is formed from a deposited film of alumina, quartz or the like and a lubricating material is applied to the bottom face portion 86 to form a coating film 87. In other words, the portion at which the lens 80 is provided is formed from a transparent material (glass material) while portions of the slider 85 at which flying rail elements 86A and 86B and a rail element or protrusion 86M are formed are formed as a deposited film.

Meanwhile, in a slider 88 shown in FIG. 24, a substrate is used to form a bottom face portion 89 and a lubricating material is applied to the bottom face portion 89 to form a coating film 90. In other words, the portion at which the lend 80 is provided is formed from a transparent material (glass material), and this portion is integrated with the bottom face portion 89, on which rail elements 89A and 89B and a rail element or protrusion 89M are formed, by junction (anode junction or the like) thereby to produce the entire slider. It is to be noted that, in the working process, the junction may be performed after the coating film 90 is formed on the bottom face portion 89 or the coating film 90 may be formed on the bottom face portion 89 after the junction is performed.

As described above, by coating or applying a lubricating material having a thickness which provides a comparatively less significant optical problem to an opposing face of a slider to a disk, an effect that sticking of a foreign particle and so forth to the bottom face of the slider is prevented or a foreign particle can be removed readily from between the bottom face of the slider and the surface of the disk is achieved. Further, the coefficient of friction can be reduced and sticking and so forth between the slider and the disk can be prevented.

Further, by applying a roughing process to the bottom face of the slider by polishing or the like, sticking and so forth between the slider and the disk can be prevented thereby to decrease the friction. For example, surface working is performed preferably with a relative roughness (concave and convex) of, for example, 1 to 10 nm.

According to the configuration described above, the following advantages can be achieved.

- By forming a rail element or protrusion, which may have various shapes, at a mid portion between flying rail elements in the widthwise direction (roll direction) of a slider as viewed in an inflow direction of air and causing a beam to pass through the rail element or protrusion, an influence of a foreign particle can be eliminated. Further, since the beam passes through the rail element or protrusion in the middle which is a position at which the variation of the flying height of the slider is least, the stability can be assured. In particular, taking it into consideration that the variation of the flying height is comparatively great at portions rather near to the outer circumference and the inner circumference of the slider in a relationship to the circumferential direction of the disk (refer to FIG. 7), preferably the passage for a beam is set to the rail element or protrusion in the middle.

- By providing a difference in height between flying rail elements paired with each other and the rail element or protrusion positioned between the flying rail elements without making the heights of them equal to each other, that is, by making the height of the rail element or protrusion comparatively low to provide an offset, the influence of the variation of the flying height on the beam can be reduced without degrading the effect of the countermeasure against foreign particles. Further, damage to the rail element or protrusion by a foreign particle can be prevented.

- By adopting a structure (flying head structure) which makes use of an air bearing formed between the slider and the disk, reduction in thickness of a disk drive apparatus (ROM, RAM/WO or the like) of the optical type or the magneto-electric type can be realized. Besides, by taking a sufficient countermeasure against foreign particles, degradation of the performance can be prevented and the quality and the reliability can be raised.

Industrial Applicability

As apparent from the foregoing description, according to the invention as set forth in claims 1, 11 and 21, since beam light passes through the middle rail element or protrusion, an optical influence when a foreign particle or the like flows into a gap between the slider and the disk-type recording medium together with an air flow can be eliminated, and degradation of the recording performance or the reproduction performance can be prevented.

According to the invention as set forth in claims 2, 12 and 22, due to the formation of the offset, the stability upon flying of the slider is improved and an influence on the beam is reduced, and besides damage to the bottom face of the slider by a foreign particle can be moderated.

According to the invention as set forth in claims 3, 13 and 23, the posture (roll posture) of the slider in the flown state can be stabilized.

According to the invention as set forth in claims 4, 14 and 24, an optical influence can be reduced by preventing the inclination of the lens in the flying posture.

According to the invention as set forth in claims 5, 15 and 25, the slider wherein the lens is integrated with the substrate can be produced and is suitable for reduction in thickness and improvement in accuracy.

According to the invention as set forth in claims 6, 16 and 26, it is advantageous in terms of the cost and the workability.

According to the invention as set forth in claims 7, 17 and 27, the bottom face of the slider can be protected from a foreign particle and so forth and the durability can be raised.

According to the invention as set forth in claims 8, 18 and 28, the coefficient of friction can be reduced and sticking of a foreign particle to the bottom face of the slider and so forth can be prevented.

According to the invention as set forth in claims 9, 19 and 29, the slider can be prevented from sticking to and closely contacting with the disk.

According to the invention as set forth in claims 10, 20 and 30, the flying height of the slider can be prevented from being lowered by an unnecessarily great amount.

**Claims**

1. A flying slider which is flown from a disk-type recording medium by an air flow produced by rotation of the disk-type recording medium and passes beam light condensed by a lens therethrough so that the beam light is illuminated on the disk-type recording medium, **characterized in that** said flying slider is configured so as to have

   a pair of rail elements formed in parallel to each other along the direction of the air flow on a face of said flying slider which opposes to the disk-type recording medium, and

   a middle rail element or protrusion extending in the direction of the air flow substantially in the middle in a widthwise direction of said pair of rail elements perpendicular to the direction of the air flow and formed with a width smaller than that of said rail elements, and that said rail element or protrusion passes the beam light therethrough.

2. A flying slider according to claim 1, **characterized in that**

   said pair of rail elements include a first rail element and a second rail element for flying, and the height of said middle rail element or protrusion is smaller than the height of said first and second rail elements taking a groove formed between said first rail element and said second rail element as a reference so that an offset is formed between said middle rail element or protrusion and said first and second rail elements.

3. A flying slider according to claim 1, **characterized in that**

   the widths of said rail elements in a radial direction of the disk-type recording medium differ depending upon the difference in linear velocity at positions on the disk-type recording medium corresponding to said rail elements.

4. A flying slider according to claim 1, **characterized in that**

   said lens is provided on an opposing face of said middle rail element or protrusion to the disk-type recording medium, and in a condition wherein said flying slider is flown by the air flow produced by rotation of the disk-type recording medium, said lens is disposed substantially in parallel to a surface of the disk-type recording medium.

5. A flying slider according to claim 1, **characterized in that**

said lens is formed by filling a recess of a substrate formed from a transparent material with another transparent material of a refractive index different from that of the transparent material.

6. A flying slider according to claim 5, **characterized in that**

said substrate is formed from a glass material.

7. A flying slider according to claim 1, **characterized in that**

said pair of rail elements or said middle rail element or protrusion is formed using a material harder than the material from which said slider is formed.

8. A flying slider according to claim 1, **characterized in that**

a lubricating material is coated or applied to an opposing face of said flying slider to the disk-type recording medium.

9. A flying slider according to claim 1, **characterized in that**

an opposing face of said flying slider to the disk-type recording medium is a face worked by roughing.

10. A flying slider according to claim 1, **characterized in that**

opposing faces of said pair of rail elements to the disk-type recording medium are formed as spherical faces convex to the disk-type recording medium side.

11. An optical head apparatus which includes a light source provided for illumination of light on a disk-type recording medium and a slider for being flown by an air flow produced by rotation of the disk-type recording medium and wherein an optical system including an objective lens or the optical system and a magnetic field generation section are disposed on said slider and a bearing action by an air layer formed between said slider and the disk-type recording medium is utilized to perform head driving control in a focusing direction, **characterized in that**

said slider has a pair of rail elements formed in parallel to each other along the direction of the air flow on a face thereof which opposes to the disk-type recording medium and a middle rail element or protrusion extending in the direction of the air flow substantially in the middle in a widthwise direction of said pair of rail elements perpendicular to the direction of the air flow and formed with a width smaller than that of said rail elements, and said rail element or protrusion passes therethrough a beam light condensed by said objective lens.

12. An optical head apparatus according to claim 11, **characterized in that**

said pair of rail elements include a first rail element and a second rail element for flying, and the height of said middle rail element or protrusion is smaller than the height of said first and second rail elements taking a groove formed between said first rail element and said second rail element as a reference so that an offset is formed between said middle rail element or protrusion and said first and second rail elements.

13. An optical head apparatus according to claim 11, **characterized in that**

the widths of said rail elements in a radial direction of the disk-type recording medium differ depending upon the difference in linear velocity at positions on the disk-type recording medium corresponding to said rail elements.

14. An optical head apparatus according to claim 11, **characterized in that**

said lens is provided on an opposing face of said middle rail element or protrusion to the disk-type recording medium, and in a condition wherein said flying slider is flown by the air flow produced by rotation of the disk-type recording medium, said lens is disposed substantially in parallel to a surface of the disk-type recording medium.

15. An optical head apparatus according to claim 11, **characterized in that**

said slider has a substrate formed from a transparent material, and said lens is formed by filling a recess of said substrate with another transparent material of a refractive index different from that of the transparent material.

16. An optical head apparatus according to claim 15, **characterized in that**

said substrate is formed from a glass material.

17. An optical head apparatus according to claim 11, **characterized in that**

said pair of rail elements or said middle rail element or protrusion is formed using a material harder than the material from which said slider is formed.

18. An optical head apparatus according to claim 11, **characterized in that**

a lubricating material is coated or applied to an opposing face of said slider to the disk-type recording medium.

19. An optical head apparatus according to claim 11, **characterized in that**

an opposing face of said slider to the disk-type recording medium is a face worked by roughing.

20. An optical head apparatus according to claim 11, **characterized in that**

opposing faces of said pair of rail elements to the disk-type recording medium are formed as spherical faces convex to the disk-type recording medium side.

21. An information processing apparatus wherein an optical head apparatus which includes rotation means for rotating a disk-type recording medium and performs information recording or information reproduction on or from the disk-type recording medium includes a light source provided for illumination of light on the disk-type recording medium and a slider for being flown by an air flow produced by the rotation of the disk-type recording medium and wherein an optical system including an objective lens or the optical system and a magnetic field generation section are disposed on said slider and a bearing action by an air layer formed between said slider and the disk-type recording medium is utilized to perform head driving control in a focusing direction, **characterized in that**

said slider has a pair of rail elements formed in parallel to each other along the direction of the air flow on a face thereof which opposes to the disk-type recording medium and a middle rail element or protrusion extending in the direction of the air flow substantially in the middle in a widthwise direction of said pair of rail elements perpendicular to the direction of the air flow and formed with a width smaller than that of said rail elements, and said rail element or protrusion passes therethrough a beam light condensed by said objective lens.

22. An information processing apparatus according to claim 21, **characterized in that**

said pair of rail elements include a first rail element and a second rail element for flying, and the height of said middle rail element or protrusion is smaller than the height of said first and second rail elements taking a groove formed between said first rail element and said second rail element as a reference so that an offset is formed between said middle rail element or protrusion and said first and second rail elements.

23. An information processing apparatus according to claim 21, **characterized in that**

the widths of said rail elements in a radial direction of the disk-type recording medium differ depending upon the difference in linear velocity at positions on the disk-type recording medium corresponding to said rail elements.

24. An information processing apparatus according to claim 21, **characterized in that**

said lens is provided on an opposing face of said middle rail element or protrusion to the disk-type recording medium, and in a condition wherein said flying slider is flown by the air flow produced by rotation of the disk-type recording medium, said lens is disposed substantially in parallel to a surface of the disk-type recording medium.

25. An information processing apparatus according to claim 21, **characterized in that**

said slider has a substrate formed from a transparent material, and said lens is formed by filling a recess of said substrate with another transparent material of a refractive index different from that of the transparent material.

26. An information processing apparatus according to claim 25, **characterized in that**

said substrate is formed from a glass material.

27. An information processing apparatus according to claim 21, **characterized in that**

said pair of rail elements or said middle rail element or protrusion is formed using a material harder than the material from which said slider is formed.

28. An information processing apparatus according to claim 21, **characterized in that**

a lubricating material is coated or applied to an opposing face of said slider to the disk-type recording medium.

29. An information processing apparatus according to claim 21, **characterized in that**

an opposing face of said slider to the disk-type recording medium is a face worked by roughing.

30. An information processing apparatus according to claim 21, **characterized in that**

opposing faces of said pair of rail elements to the disk-type recording medium are formed as spherical faces convex to the disk-type recording medium side.

# F I G. 1

INPUT/OUTPUT DATA

SIGNAL PROCESSING SECTION 8

CONTROL SECTION 9

# F I G. 2

# FIG. 3

# F I G. 4 A

S

G

G

# F I G. 4 B

27

2a

t

2b

A

$G_{in}$

G

G

2

F I G. 5

F I G. 6

# F I G. 7

EP 1 596 382 A1

# FIG. 8

DEEP GROOVE: 20 TO 30 μm

SHALLOW GROOVE: 0.5 μm

FLATTENED PORTION: 0 μm

EP 1 596 382 A1

F I G. 9

EP 1 596 382 A1

FIG. 10

44U
44L
43
47
45B
46
45A

24

F I G. 1 1

# F I G. 1 2

EP 1 596 382 A1

F I G. 1 3

58    55

$\gamma$    $\delta$

56A    57    56B

F I G. 1 4

58    55

$\gamma$    $\delta$

57    56A (OR 56B)

EP 1 596 382 A1

# FIG. 15

# F I G . 1 6

# F I G . 1 7

# FIG. 18

EP 1 596 382 A1

AIR FLOW →

DISK FACE

76  74

$\gamma$  $\delta$

d

75

# F I G. 1 9 A

# F I G. 1 9 B

F I G. 2 0

EP 1 596 382 A1

# F I G. 2 1

80    77

82    79    82    82
78A    78B

# F I G. 2 2

80    77

83    84    83    84    84    83
78A    79    83    78B

EP 1 596 382 A1

# F I G. 2 3

# F I G. 2 4

# F I G. 2 5

AIR FLOW →

a

d   b   c

e   S

b

| DEEP GROOVE: 5 TO 20 $\mu$m |
| SHALLOW GROOVE: 0.5$\mu$m |
| FLATTENED PORTION: 0$\mu$m |

EP 1 596 382 A1

# FIG. 26

AIR FLOW →

DEEP GROOVE: 20 TO 30 $\mu$m

SHALLOW GROOVE: 0.5 $\mu$m

FLATTENED PORTION: 0 $\mu$m

EP 1 596 382 A1

# F I G. 2 7

RATIO OF DUST AMOUNT

PARTICLE SIZE （μm）

EP 1 596 382 A1

## INTERNATIONAL SEARCH REPORT

| International application No. |
|---|
| PCT/JP2004/000949 |

A. CLASSIFICATION OF SUBJECT MATTER
    Int.Cl$^7$  G11B7/135

According to International Patent Classification (IPC) or to both national classification and IPC

B. FIELDS SEARCHED

Minimum documentation searched (classification system followed by classification symbols)
    Int.Cl$^7$  G11B7/135, 7/09, 7/095, 11/105

Documentation searched other than minimum documentation to the extent that such documents are included in the fields searched
    Jitsuyo Shinan Koho        1922-1996   Toroku Jitsuyo Shinan Koho   1994-2004
    Kokai Jitsuyo Shinan Koho   1971-2004   Jitsuyo Shinan Toroku Koho   1996-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 58-118026 A  (Fujitsu Ltd.),<br>13 July, 1983 (13.07.83),<br>Full text; Figs. 1 to 11 | 1,2,4-12,<br>14-22,24-30 |
| Y | Full text; Figs. 1 to 11<br>(Family: none) | 3,13,23 |
| Y | Microfilm of the specification and drawings annexed to the request of Japanese Utility Model Application No. 37845/1984(Laid-open No. 150668/1985) (Ricoh Co., Ltd.),<br>07 October, 1985 (07.10.85),<br>Full text; Figs. 1 to 5<br>(Family: none) | 3,13,23 |

☐   Further documents are listed in the continuation of Box C.        ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    13 April, 2004 (13.04.04) | Date of mailing of the international search report<br>    27 April, 2004 (27.04.04) |
|---|---|
| Name and mailing address of the ISA/<br>    Japanese Patent Office | Authorized officer |
| Facsimile No. | Telephone No. |

Form PCT/ISA/210 (second sheet) (January 2004)

## INTERNATIONAL SEARCH REPORT

International application No.

PCT/JP2004/000949

**Box No. II   Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III   Observations where unity of invention is lacking (Continuation of item 3 of first sheet)**

This International Searching Authority found multiple inventions in this international application, as follows:

    Claims 1, 2, 4-12, 14-22, 24-30 relate to an arrangement having a slider
    comprising a pair of parallel rails, and a narrow intermediate rail surrounded
    by the pair of rails.

    Claims 3, 13, 23 relate to an arrangement having a slider comprising a pair
    of rails, the width of each rail differing according to the difference in
    linear speed at the position of a disk-like recording medium corresponding
    to each rail.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest.

☒ No protest accompanied the payment of additional search fees.

Form PCT/ISA/210 (continuation of first sheet (2)) (January 2004)